# FASCICULE DE BREVET EUROPEEN

(11) **EP 3 934 107 B1**
(45) Date de publication et mention de la délivrance du brevet: **10.05.2023**
(21) Numéro de dépôt: 21181335.7
(22) Date de dépôt: 24.06.2021
(51) Int. Cl.: H04B 3/54

(54) **PROCEDE ET DISPOSITIF DE TRANSMISSION D'UN MESSAGE**
NACHRICHTENÜBERTRAGUNGSVERFAHREN UND -VORRICHTUNG
METHOD AND DEVICE FOR TRANSMITTING A MESSAGE

(30) Priorité: 01.07.2020 FR 2006933
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); BARTHES, Julien, 92500 RUEIL MALMAISON (FR); TERRIEN, Clément, 92500 RUEIL MALMAISON (FR)
(74) Mandataire: Cabinet Le Guen Maillet

(56) Documents cités:
- US-A1- 2012 189 042
- US-A1- 2016 127 515

## Description

### DOMAINE TECHNIQUE

Au moins un mode de réalisation concerne un procédé de transmission pour transmettre un message à partir d'un premier dispositif noeud vers un second dispositif noeud appartenant à un voisinage réseau du premier dispositif noeud, lesdits premier et second dispositifs noeuds appartenant à un réseau d'alimentation électrique utilisant des communications par courants porteurs en ligne. Au moins un mode de réalisation concerne un dispositif mettant en oeuvre le procédé.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée pas un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle. Dans une évolution de la norme G3-PLC un canal RF (acronyme de radio-fréquence) peut être utilisé à la place d'une desdites bandes fréquentielles CPL. Dans la suite du document, les termes « bande fréquentielle » désignent indifféremment une bande fréquentielle CPL ou un canal RF.appartiennent à un réseau d'alimentation électrique utilisant des communications par courants porteurs en ligne et/ou par radio-fréquences. Le procédé de transmission dit en

Or, les canaux de courants porteurs (« power line channel » en anglais) ou les canaux radio-fréquences sont des supports très hostiles. La bande fréquentielle pour laquelle les éléments constitutifs d'un réseau ont été certifiés peut donc se retrouver fortement perturbée. Les échanges dans le réseau ne sont alors plus assurés correctement.

Il est souhaitable de pallier ces différents inconvénients de l'état de la technique. Il est notamment souhaitable de proposer un procédé de communication par courant porteur en ligne permettant d'améliorer les échanges dans le réseau notamment en cas de fortes perturbations qui soit simple à mettre en oeuvre. Le document US 2016/127515 décrit un dispositif de communication dans un réseau qui peut recevoir un flux de trames, chaque trame comprenant une ou plusieurs balises. Le dispositif de communication est configuré pour se connecter au réseau pour transmettre et recevoir des données en utilisant un protocole de communication identifié grâce aux 5 balises. Le document US 2012/189042 décrit notamment des procédés de transmission et de réception d'unités de données de protocole (PDU en terminologie anglaise) robustes dans des communications par courants porteurs en ligne (PLC).

### EXPOSE DE L'INVENTION

La présente invention est définie par les revendications indépendantes ci-jointes. D'autres modes de réalisation préférés peuvent être trouvés dans les revendications dépendantes.

Un procédé de transmission d'un message pour transmettre un message à partir d'un premier dispositif noeud vers un second dispositif noeud appartenant à un voisinage réseau dudit premier dispositif noeud est décrit. Les premier et second dispositifs noeuds mode hyper-robuste comprend les étapes suivantes mises en oeuvre par ledit premier dispositif noeud :
- transmettre, audit second dispositif noeud, ledit message sur une première bande fréquentielle d'un ensemble de bandes fréquentielles comprenant au moins deux bandes fréquentielles, ledit message étant modulé selon un mode robuste, une modulation selon ledit mode robuste comprenant successivement un codage Reed-Solomon, un codage convolutif, un codage par répétition de codes et une modulation BPSK; et
- transmettre, audit second dispositif noeud, ledit message sur au moins une seconde bande fréquentielle dudit ensemble de bandes fréquentielles, ledit message étant modulé selon ledit mode robuste et lesdites première et seconde bandes fréquentielles étant différentes.

De cette façon, en cas de fortes perturbations sur une bande fréquentielle, le message peut malgré tout parvenir à passer sur une autre bande fréquentielle. En effet, le second dispositif noeud n'a besoin de recevoir le message que sur une seule des bandes fréquentielles sur lesquelles il a été transmis. Ce mode de transmission est donc particulièrement avantageux en cas de fortes perturbations.

Dans un mode particulier de réalisation, les bandes fréquentielles dudit ensemble de bandes fréquentielles sont disjointes.

Dans un mode particulier de réalisation, les étapes suivantes sont mises en oeuvre par ledit second dispositif noeud :
- recevoir ledit message sur ladite première bande fréquentielle et sur ladite seconde bande fréquentielle ;
- en déduire que le premier dispositif noeud est configuré selon le mode de transmission hyper-robuste ;
- changer son propre mode de transmission en mode hyper-robuste dans le cas où son propre mode de transmission est différent dudit mode hyper-robuste ;
- transmettre, audit premier dispositif noeud, un message d'acquittement sur ladite première bande fréquentielle et un message d'acquittement sur ladite seconde bande fréquentielle.

Dans un mode particulier de réalisation, en déduire que le premier dispositif noeud est configuré selon le mode de transmission hyper-robuste comprend en déduire que le premier dispositif noeud est configuré selon le mode de transmission hyper-robuste quand ledit second message est reçu avant la fin d'une fenêtre temporelle de longueur prédéfinie commençant à la réception dudit message sur ladite première bande temporelle.

Dans un mode particulier de réalisation, ledit premier dispositif noeud, à réception d'un message en provenance dudit second dispositif noeud sur une desdites première et seconde bandes fréquentielles, renvoie un message d'acquittement sur ladite première bande fréquentielle et un message d'acquittement sur ladite seconde bande fréquentielle et ledit second dispositif noeud, recevant un message d'acquittement sur lesdites deux bandes fréquentielles, en déduit que le premier dispositif noeud est configuré selon le mode de transmission hyper-robuste et change son propre mode de transmission en mode hyper-robuste dans le cas où son propre mode de transmission est différent dudit mode hyper-robuste .

Dans un mode particulier de réalisation, ledit premier dispositif noeud considère que ledit message a été correctement reçu par ledit second dispositif noeud dans le cas où au moins un message d'acquittement est reçu par ledit premier dispositif sur au moins une des première et seconde bandes fréquentielles. Par exemple, ledit premier dispositif noeud considère que ledit message a été correctement reçu par ledit second dispositif noeud dans le cas où au moins un desdits messages d' acquittement transmis par ledit second dispositif noeud est reçu par ledit premier dispositif noeud.

Dans un mode particulier de réalisation, ledit ensemble de bandes fréquentielles comprend :
la bande fréquentielle CENELEC A;
la bande fréquentielle CENELEC B;
la bande fréquentielle FCC ou la bande fréquentielle ARIB ; et
le canal RF de G3-PLC hybrid RF.

Un dispositif noeud d'un réseau d'alimentation électrique utilisant des communications par courants porteurs en ligne et/ou par radio-fréquences est décrit. Le dispositif noeud est configuré pour communiquer selon un mode de transmission dit hyper-robuste avec un autre dispositif noeud dudit réseau appartenant à son voisinage réseau et il comprend :
- des moyens pour transmettre, audit second dispositif noeud, ledit message sur une première bande fréquentielle d'un ensemble de bandes fréquentielles comprenant au moins deux bandes fréquentielles, ledit message étant modulé selon un mode robuste, une modulation selon ledit mode robuste comprenant successivement un codage Reed-Solomon, un codage convolutif, un codage par répétition de codes et une modulation BPSK; et
- des moyens transmettre, audit second dispositif noeud, ledit message sur au moins une seconde bande fréquentielle dudit ensemble de bandes fréquentielles, ledit message étant modulé selon ledit mode robuste et lesdites première et seconde bandes fréquentielles étant différentes.

Un réseau de communication par courants porteurs en ligne et/ou par radio-fréquences est décrit. Le réseau comprend une pluralité de dispositifs noeuds, ladite pluralité de dispositifs noeuds comprenant au moins un dispositif noeud selon le mode de réalisation précédent lequel comprend dans son voisinage au moins un dispositif noeud comprenant :
- des moyens pour recevoir ledit message sur ladite première bande fréquentielle et sur ladite seconde bande fréquentielle ;
- des moyens pour en déduire que le dispositif noeud selon le mode de réalisation précédent est configuré selon le mode de transmission hyper-robuste ;
- des moyens pour changer son propre mode de transmission en mode de transmission hyper-robuste dans le cas où son propre mode de transmission est différent dudit mode de transmission hyper-robuste ;
- des moyens pour transmettre, audit dispositif noeud selon le mode de réalisation précédent, un message d'acquittement sur ladite première bande fréquentielle et un message d'acquittement sur ladite seconde bande fréquentielle.

Un produit programme d'ordinateur est décrit. Il comprend des instructions pour mettre en oeuvre, par un dispositif noeud, le procédé selon l'un des modes de réalisation précédents, lorsque ledit programme est exécuté par un processeur du dispositif noeud.

Un support de stockage est également décrit. Il stocke un programme d'ordinateur comprenant des instructions pour mettre en oeuvre, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication maillé selon un mode de réalisation ;
[Fig. 2] illustre schématiquement un procédé de transmission d'un message ou d'une trame dans un mode hyper-robuste selon un mode particulier de réalisation ;
[Fig. 3] illustre schématiquement un procédé de transmission d'un message ou d'une trame dans un mode hyper-robuste selon un autre mode particulier de réalisation ;
[Fig. 4] illustre schématiquement un procédé de transmission d'un message ou d'une trame dans un mode hyper-robuste selon un autre mode particulier de réalisation ; et,
[Fig. 5] illustre schématiquement un exemple d'architecture matérielle d'un dispositif noeud du réseau de communication maillé selon un mode de réalisation.

### EXPOSE DETAILLE DE MODES DE REALISATION

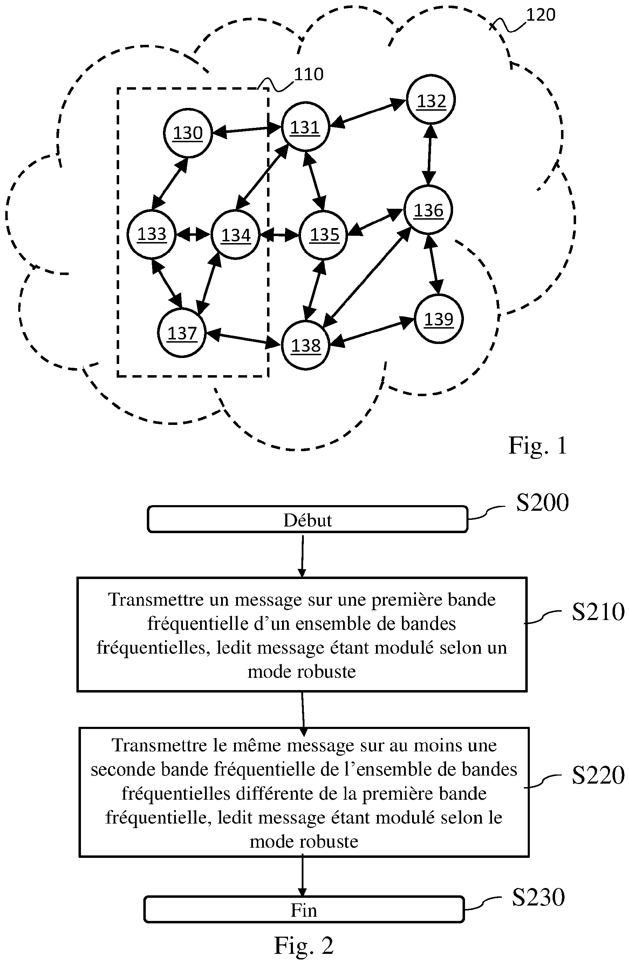

La **Fig. 1** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC et/ou par radio-fréquences pour permettre à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication maillé 120. Le réseau de communication maillé 120 peut comporter d'autres dispositifs noeuds, par exemple installés au niveau de transformateurs électriques. Le réseau de communication 120 a donc une structure maillée, telle que représentée schématiquement sur la Fig. 1 grâce à des flèches, où des dispositifs noeuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa.

La présente invention est ainsi particulièrement adaptée au contexte de la technologie G3-PLC et G3-PLC hybrid RF (marque déposée).

Le réseau de communication maillé 120 comporte ainsi une pluralité de dispositifs noeuds 130, 131, 132, 133, 134, 135, 136, 137, 138, 139. A chaque dispositif noeud du réseau de communication maillé 120 est associé un voisinage réseau. Sur la Fig. 1, le dispositif noeud 133 est associé à un voisinage réseau 110 englobant les dispositifs noeuds 130, 134 et 137. En effet, dans le réseau de communication maillé 120, un signal ou un message diffusé par un dispositif noeud (tel que le dispositif noeud 133) n'est en général pas visible en tout point dudit réseau de communication. Chaque dispositif noeud émetteur de signaux ou de messages dispose alors d'un voisinage réseau, c'est-à-dire d'un sous-ensemble dudit réseau de communication maillé 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (*e.g*. puissance, schéma de modulation et de codage, topologie réseau...) du dispositif noeud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication maillé 120.

Pour découvrir une route appropriée dans le réseau de communication maillé 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite requête si ledit dispositif noeud en question n'est pas le dispositif noeud destination. Par diffusion de proche en proche, plusieurs requêtes de découverte de route sont typiquement reçues par le dispositif noeud destination, chacune de ces requêtes ayant suivi un chemin différent dans le réseau de communication maillé 120.

Chaque dispositif noeud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif noeud du réseau de communication maillé 120. A chaque fois qu'un dispositif noeud génère un nouveau message, ledit dispositif noeud incrémente son compteur et inclut dans le message en question la valeur dudit compteur. Ainsi, lorsqu'un dispositif noeud reçoit un message, ledit dispositif noeud analyse l'identifiant du dispositif noeud à l'origine du message et le numéro de séquence inclus dans le message, et peut déterminer si le message reçu est effectivement un nouveau message ou une nouvelle copie d'un message déjà reçu.

Chaque dispositif noeud peut toutefois décider de ne pas relayer une requête de découverte de route, lorsqu'un ou plusieurs critères ne sont pas remplis. Notamment, avant de décider de relayer ladite requête, le dispositif noeud en question vérifie typiquement si ladite requête comporte une information représentative d'un coût de route, depuis le dispositif noeud source jusqu'au dispositif noeud en question, qui est meilleur que le coût de route représenté par une information contenue dans une autre requête de découverte de route précédemment reçue par le dispositif noeud en question. En d'autres termes, le dispositif noeud en question relaie, par diffusion, ladite requête si ladite requête concerne un chemin qui a suivi, depuis le dispositif noeud source jusqu'au dispositif noeud en question, un trajet de plus faible coût que toute autre requête précédemment reçue par le dispositif noeud en question (donc pour la même découverte de route).

Le coût d'une route peut s'appuyer sur une ou plusieurs métriques. Par exemple, le coût de route est un nombre de sauts (« hops » en anglais) subis par la requête en question depuis le dispositif noeud source. Selon un autre exemple, le coût de route est le résultat d'un calcul qui dépend de la bande passante des liens franchis, par la requête en question depuis le dispositif noeud source. Selon encore un autre exemple, le coût de route est proportionnel à la latence subie par la requête en question depuis le dispositif noeud source. D'autres métriques peuvent être utilisées pour établir un coût de route, c'est-à-dire un coût de transit, depuis le dispositif noeud source jusqu'au dispositif noeud destination.

Lorsqu'un dispositif noeud décide de relayer, par diffusion, une requête de découverte de route, le dispositif noeud en question met à jour l'information de coût de route contenue dans ladite requête, de manière à prendre en compte que ladite requête est passée par le dispositif noeud en question. Ainsi, selon un tel principe, plusieurs requêtes de découverte de route parviennent typiquement au dispositif noeud destination, chacune comportant une information de coût de route que ladite requête a suivi pour être propagée depuis le dispositif noeud source jusqu'au dispositif noeud destination. Le trajet emprunté par ladite requête de découverte de route associée au meilleur coût de route est ensuite sélectionné pour permettre au dispositif noeud source de transmettre des données au dispositif noeud destination. Pour activer la route en question le dispositif noeud destination transmet une réponse de découverte de route, appelée RREP (« Route REPly » en anglais). Cette réponse de découverte de route est transmise de proche en proche en suivant le chemin inverse de la requête de découverte de route qui était associée au meilleur coût de route. Chaque dispositif noeud recevant la réponse de découverte de route met à jour une table de routage interne, au niveau de la couche liaison de données DLL, afin d'y indiquer que tout message ultérieur transmis en mode point-à-point (« unicast » en anglais) depuis le dispositif noeud source en question vers le dispositif noeud destination en question doit être transmis ou relayé vers tel ou tel dispositif noeud de son voisinage réseau. Au sein de la couche liaison, aussi appelée couche MAC (« Medium Access Control » en anglais), les tables de routage sont préférentiellement implémentées dans une sous-couche d'adaptation en charge de la mise en oeuvre du protocole de routage dans le réseau de communication. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre du standard IEEE 802.15.4 et qui a été étendu à la technologie G3-PLC et G3-PLC hybrid RF (marque déposée). A noter que le protocole 6LoWPAN s'appuie lui-même sur le protocole de routage de type réactif LOADng susmentionné.

Grâce aux tables de routage ainsi configurées, des communications point-à-point (« unicast » en anglais) peuvent être effectuées par toute paire de dispositifs noeuds du réseau de communication maillé 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Pour communiquer entre dispositifs noeuds voisins (c'est-à-dire des dispositifs noeuds qui sont dans le voisinage réseau l'un de l'autre), les messages sont transmis sous forme de trames modulées. Lorsqu'une trame modulée est spécifiquement adressée à un dispositif noeud voisin et qu'elle est correctement démodulée par celui-ci, ledit dispositif noeud voisin retransmet un acquittement ACK au dispositif noeud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

Les canaux de courants porteurs (« power line channel » en anglais) et le canal RF sont des supports très hostiles. Les caractéristiques et paramètres du canal varient selon la fréquence, l'emplacement, l'heure et le type d'équipements branchés dessus. Les régions à basses fréquences (de 10 kHz à 200 kHz) sont plus particulièrement sensibles aux interférences. Outre le bruit de fond, le canal est sujet aux bruits impulsionnels et aux interférences en bande étroite. La technologie OFDM utilisé par G3-PLC fait appel à des techniques avancées de codage canal. Cette combinaison autorise une communication très robuste en présence d'interférences en bande étroite, de bruits impulsionnels et d'atténuations sélectives de la fréquence.

A cet effet, un codeur FEC (acronyme anglais de « Forward Error Correction ») est notamment utilisé. Ce codeur FEC est composé d'un encodeur de Reed-Salomon et d'un encodeur convolutif qui permettent d'introduire de la redondance au niveau bit. Ils permettent ainsi à un noeud destinataire de retrouver des bits perdus à cause de bruit de fond et de bruits impulsionnels.

Dans le cadre préférentiel de la norme, G3-PLC définit plusieurs types de modulation sont définis, parmi lesquels : BPSK, DBPSK, QPSK, DQPSK, 8-PSK, D8PSK, 16-QAM et un mode dit robuste (ou ROBO). En mode normal, l'encodeur FEC (« Forward Error Correction » ou FEC en anglais) est composé d'un encodeur Reed-Solomon et d'un encodeur convolutif. En mode robuste, l'encodeur FEC (« Forward Error Correction » ou FEC en anglais) est composé d'un encodeur Reed-Solomon et d'un encodeur convolutif comme dans le mode normal. Toutefois, dans le cas du mode robuste, l'encodeur convolutif est suivi par un code de répétition. Le code de répétition répète chaque bit en sortie de l'encodeur convolutif 3 fois. Ainsi, le système est rendu plus robuste aux dégradations du canal au prix d'une réduction du débit par 4. Les données ainsi obtenues sont ensuite passées à l'entrée d'un entrelaceur (« interleaver » en anglais).

G3-PLC définit également un mode super-robuste dans lequel le code de répétition répète chaque bit en sortie de l'encodeur convolutif 5 fois, ce qui accroît la robustesse. Ce mode n'est utilisé que pour une partie du contrôle de trame FCH (acronyme anglais de « Frame Control Header ») d'une trame de données La modulation dans les modes robuste et super-robuste est une modulation BPSK.

En termes de bandes fréquentielles utilisables dans le cadre de la mise en oeuvre du réseau de communication maillé 120, on peut citer : la bande fréquentielle CENELEC A, qui va d'approximativement 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz ; et le canal RF de G3-PLC hybrid RF. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B ; et un cinquième schéma de modulation pour le canal RF de G3-PLC hybrid RF. Il apparaît de ce qui précède qu'un dispositif noeud peut utiliser simultanément plusieurs bandes fréquentielles pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif noeud étant donné qu'elles se recouvrent l'une l'autre.

Ainsi, dans réseau de communication maillé 120, les dispositifs noeuds ou au moins une partie des dispositifs noeuds ont des capacités multi-bandes. Un dispositif noeud a des capacités multi-bandes dans le cas où il est configuré pour pouvoir utiliser simultanément plusieurs bandes fréquentielles différentes, e.g. CENELEC-A et FCC ou FCC et le canal RF de G3-PLC hybrid RF, au lieu de choisir une bande unique. Par exemple, le dispositif noeud en question peut fragmenter un message en différents fragments selon le protocole 6LoWPAN. Le procédé de fragmentation est plus particulièrement décrit dans la section 5.3 de la recommandation RFC 4944 (publiée en septembre 2007). Chaque fragment est alors transmis indépendamment des autres fragments sur des bandes fréquentielles qui peuvent être différentes. Les bandes fréquentielles associées sont par exemple sélectionnées dans l'ensemble comprenant les bandes fréquentielles autorisées par G3-PLC, i.e. CENELEC A, CENELEC B, ARIB et FCC et le canal RF de G3-PLC hybrid RF. Dans une variante, les premières et secondes bandes fréquentielles associées sont sélectionnées dans un sous-ensemble des bandes fréquentielles autorisées par G3-PLC et G3-PLC hybrid RF, le sous-ensemble comprenant au moins deux bandes parmi toutes les bandes autorisées par G3-PLC et G3-PLC hybrid RF. Ce mode de transmission est appelé dans la suite transmission multi-bandes par fragmentation. Dans le cas particulier où le message à transmettre est suffisamment court, il n'est pas fragmenté.

Dans un autre mode de réalisation, un dispositif noeud ayant des capacités multi-bande peut transmettre le même message simultanément dans toutes les bandes fréquentielles de l'ensemble de bandes fréquentielles prises en charge (par l'émetteur et le récepteur). Ce mode de transmission est appelé dans la suite le mode hyper-robuste (ou HROBO). Dans chaque bande fréquentielle, le mode robuste de G3-PLC et G3-PLC hybrid RF est alors utilisé. Dans ce mode de transmission, les messages d'acquittement sont également transmis simultanément dans toutes les bandes fréquentielles de l'ensemble de bandes fréquentielles prises en charge. Dupliquer les messages (y compris les messages d'acquittement) permet de pallier d'éventuelles perturbations. En effet, en cas de fortes perturbations sur une bande fréquentielle, le message peut malgré tout parvenir à passer sur une autre bande fréquentielle. Le récepteur n'a besoin de réussir à capter le message que sur une seule des bandes fréquentielles sur lesquelles il a été transmis. Ce mode de transmission est donc particulièrement avantageux en cas de fortes perturbations.

Un dispositif ayant des capacités multi-bande peut bénéficier des caractéristiques des différentes bandes fréquentielles en termes de débit, portée, résistance aux perturbateurs.

Dans un mode particulier de réalisation, les bandes fréquentielles sont non seulement différentes mais plus particulièrement disjointes.

Selon un mode de réalisation de l'invention, un dispositif noeud source configuré pour communiquer dans plusieurs bandes fréquentielles avec un dispositif noeud voisin destinataire peut déterminer, au besoin, quels sont les modes de communication supportés par ce dispositif noeud voisin cible, préalablement à un envoi de messages plus conséquents constituant des communications.

Afin de déterminer quels sont les modes de communication supportés par un dispositif noeud voisin destinataire (par exemple le dispositif noeud 134), un dispositif noeud source (par exemple le dispositif noeud 133) transmet, dans chacune des bandes fréquentielles pour lesquelles il est configuré pour communiquer, des messages au dispositif noeud voisin destinataire, lesdits messages comprenant chacun une information visant à solliciter, auprès du dispositif noeud cible, une estimation de canal dans la bande fréquentielle utilisée. La présence de l'information visant à solliciter une estimation de canal constitue une requête en estimation de canal. Par exemple, dans un contexte de réseau compatible avec la norme G3-PLC et G3-PLC hybrid RF (marque déposée), l'information selon laquelle une estimation canal est demandée par un dispositif noeud source à un dispositif noeud voisin destinataire est un message *Tone Map Request* défini dans la recommandation ITU-T G9903 et les informations représentatives d'au moins une estimation de canal, reçues depuis le dispositif noeud voisin cible sont comprises dans un message *Tone Map Response* tel que défini dans la section 9.3.5.2.2 de la norme G3-PLC (ITU G.9903 édition de mars 2017). Dans un exemple de réalisation, le message *Tone Map Response* comprend des informations telles que le type de modulation qu'il utilise pour la bande fréquentielle en question et un indicateur LQI de qualité de lien (LQI est l'acronyme anglais de « Link Quality Indicator »)

Le message *Tone Map Response* peut contenir d'autres informations telles que définies dans la section table 9.9 de la 9.3.5.2.2 de la recommandation ITU-T G9903 (version de Mars 2017), notamment une carte des tonalités (« tone map » en anglais). La carte des tonalités est une liste de sous-porteuses utilisées pour communiquer dans une bande fréquentielle donnée. Le dispositif source pourra donc connaitre et mémoriser des informations quant aux bandes fréquentielles qu'il peut utiliser pour communiquer avec le dispositif noeud voisin.

Selon un mode de réalisation, le dispositif noeud source enregistre, e.g. dans une table de voisinage, la ou les informations représentatives d'une estimation de canal pour chaque bande fréquentielle pour laquelle il a reçu de telles informations en réponse à une requête en estimation de canal.

A partir des informations reçues et enregistrées dans une table de voisinage, le dispositif noeud 133 peut déterminer, préalablement à des communications ultérieures avec le dispositif noeud 134, quel sont les modes de communication supportés par ce dernier. Par exemple, le dispositif noeud 133 détecte que le dispositif noeud voisin 134 est un dispositif noeud multi-bande capable de communiquer dans les bandes fréquentielles B1 et B2 s'il reçoit un message *Tone Map Response* sur chacune desdites bandes fréquentielles. Dans le cas où les messages *Tone Map Response* indiquent que le dispositif noeud 134 utilise une modulation ROBO et que le LQI est faible, i.e. inférieur à une première valeur de seuil donnée, alors le dispositif noeud 133 peut décider de communiquer avec le dispositif noeud 134 en mode HROBO. De manière symétrique, dans le cas où les messages *Tone Map Response* reçus par le dispositif noeud 134 indiquent que le dispositif noeud 133 utilise une modulation ROBO et que le LQI est faible, i.e. inférieur à la première valeur de seuil donnée, alors le dispositif noeud 134 peut également décider de communiquer avec le dispositif noeud 133 en mode HROBO.

Toutefois, il se peut que les dispositif noeud 133 et 134 prennent des décisions différentes en ce qui concerne l'utilisation du mode HROBO. Ainsi, dans un autre exemple, le dispositif noeud 133 peut décider de communiquer avec le dispositif noeud 134 en mode HROBO, e.g. parce qu'il a reçu des messages *Tone Map Response* sur toutes les bandes fréquentielles indiquant que le dispositif noeud 134 utilise une modulation ROBO et que le LQI est faible. Le dispositif noeud 134 peut lui décider de fonctionner en mode multi-bandes par fragmentation en utilisant une modulation ROBO sur chaque bande, e.g. parce qu'il a reçu des messages *Tone Map Response* sur toutes les bandes fréquentielles indiquant que le dispositif noeud 133 utilise une modulation ROBO et que le LQI est moyen, i.e. supérieur à la première valeur de seuil mais inférieur à une seconde valeur de seuil différente de la première valeur de seuil. Dans le cas où le dispositif noeud 134 reçoit un message *Tone Map Response* sur une des bandes fréquentielles indiquant que le dispositif noeud 133 utilise une modulation ROBO et que le LQI est faible et qu'il reçoit un message *Tone Map Response* sur l'autre des bandes fréquentielles indiquant que le dispositif noeud 133 utilise une modulation ROBO et que le LQI est moyen, il peut également décider de fonctionner en mode multi-bandes par fragmentation en utilisant une modulation ROBO sur chaque bande

La **Fig. 2** illustre schématiquement un procédé de transmission d'un message ou d'une trame dans le mode HROBO selon un mode particulier de réalisation. Le message M doit être transmis par un dispositif noeud source (par exemple le dispositif noeud 133) à un dispositif noeud destinataire appartenant à son voisinage réseau (par exemple le dispositif noeud 134) selon le mode HROBO. Dans ce mode de réalisation, les deux dispositifs noeuds ont des capacités multi-bandes et ont décidé de communiquer en mode HROBO. Le procédé démarre lors d'une étape S200.

Lors d'une étape S210, le dispositif noeud source transmet au dispositif noeud destinataire un message M sur une première bande fréquentielle d'un ensemble de bandes fréquentielles comprenant au moins deux bandes fréquentielles, ledit message étant modulé selon le mode robuste.

Lors d'une étape S220, le dispositif noeud source transmet au dispositif noeud destinataire le même message M sur une seconde bande fréquentielle de l'ensemble de bandes fréquentielles, le message étant modulé selon le mode robuste. La seconde bande fréquentielle est différente de la première bande fréquentielle.

Les première et seconde bandes fréquentielles sont par exemple sélectionnées dans l'ensemble des bandes fréquentielles autorisées par G3-PLC, i.e. CENELEC A, CENELEC B, et ARIB ou FCC ; et le canal RF de G3-PLC hybrid RF. Dans une variante, les première et seconde bandes fréquentielles sont sélectionnées dans un sous-ensemble des bandes fréquentielles autorisées par G3-PLC et G3-PLC hybrid RF, le sous-ensemble comprenant au moins deux bandes fréquentielles parmi toutes les bandes autorisées par G3-PLC et G3-PLC hybrid RF.

Le procédé se termine lors d'une étape S230.

Le mode hyper-robuste utilise différentes bandes de fréquences en transmettant un même message ou trame simultanément sur ces différentes bandes de fréquences. Dans chaque bande de fréquence, le mode robuste est utilisé. De manière avantageuse, le mode hyper-robuste est utilisé quand la communication entre les noeuds voisins est difficile, e.g. quand une valeur de LQI pour le lien en question est inférieure à la première valeur de seuil.

Le dispositif noeud source et un dispositif noeud destinataire se basant chacun sur les valeurs de LQI reçues dans les *tone map response* pour choisir un mode de transmission parmi le mode multi-bande (en mode ROBO dans chaque bande) ou bien le mode hyper-robuste, peuvent donc prendre des décisions différentes. Dans ce cas, l'un des dispositifs noeuds doit adapter son mode de transmission afin de le rendre compatible avec celui choisi par l'autre noeud. Ainsi, il doit être capable de passer du mode de transmission multi-bande par fragmentation avec modulation de type ROBO dans chaque bande au mode hyper-robuste s'il détecte que l'autre dispositif noeud communique en mode hyper-robuste.

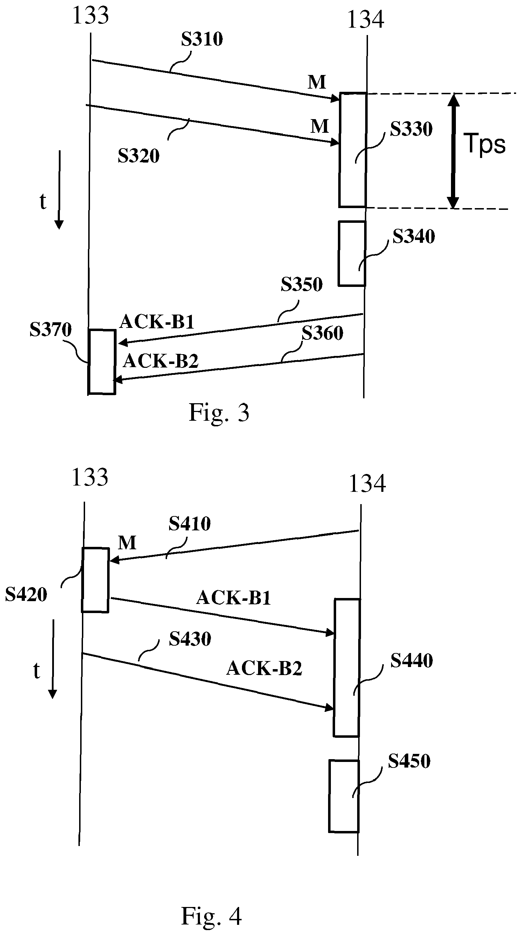

La **Fig. 3** illustre schématiquement un procédé de transmission d'un message ou trame dans le mode HROBO selon un mode particulier de réalisation. Le message M est transmis par un dispositif noeud source (par exemple le dispositif noeud 133) à un dispositif noeud destinataire appartenant à son voisinage réseau (par exemple le dispositif noeud 134). Dans ce mode de réalisation, les deux dispositifs noeuds ont des capacités multi-bandes et l'un, e.g. le dispositif noeud 133, a décidé de communiquer en mode HROBO alors que l'autre, e.g. le dispositif noeud 134, a décidé de communiquer en mode multi-bandes par fragmentation en utilisant une modulation de type ROBO sur chaque bande. Les dispositifs noeud 133 et 134 sont représentés par des barres verticales situées respectivement à gauche et à droite de la Fig.3 et les messages échangés entre les deux dispositifs sont chacun représentés par une flèche allant de l'un à l'autre des dispositifs noeuds 133 et 134, voisins l'un de l'autre. Une lecture de haut en bas de la Fig. 3 correspond à un déroulement chronologique d'étapes (ici, S310 à S370).

Lors d'une étape S310, le dispositif noeud 133 transmet un message M au dispositif noeud 134 sur la première bande fréquentielle B1 en mode ROBO. Cette étape est identique à l'étape S210 de la Fig. 2.

Lors d'une étape S320, le dispositif noeud 133 transmet le même message M sur la seconde bande fréquentielle B2 également en mode ROBO. Cette étape est identique à l'étape S220 de la Fig. 2.

Lors d'une étape S330, le dispositif noeud 134 reçoit le même message M sur les deux bandes fréquentielles en mode ROBO et en déduit que le dispositif noeud 133 communique en mode HROBO. Selon un mode particulier de réalisation, le dispositif noeud 134 prévoit, à l'arrivée du message M sur une première bande fréquentielle, e.g. la bande B1 dans le cas de la Fig. 3, une fenêtre temporelle Tps pendant laquelle il pourra recevoir le même message M sur une autre bande, e.g. la bande B2. Le dispositif noeud 134 s'il reçoit le message M pendant la fenêtre temporelle sur la bande B2 interprète cela comme une indication que le dispositif noeud 133 fonctionne en mode HROBO et pas comme un rejeu du même message.

Lors d'une étape S340, le dispositif noeud 134, ayant détecté que le dispositif noeud 133 communique en mode HROBO, change son mode de transmission multi-bandes par fragmentation en mode HROBO.

Lors d'une étape S350, le dispositif noeud 134 transmet un message d'acquittement ACK-B1 au dispositif noeud 133 sur la première bande fréquentielle B 1.

Lors d'une étape S360, le dispositif noeud 134 transmet un message d'acquittement ACK-B2 au dispositif noeud 133 sur la seconde bande fréquentielle B2. Plus précisément, à l'expiration de la fenêtre temporelle Tps, le dispositif noeud 134 transmet un message d'acquittement sur chacune des bandes fréquentielles où il a reçu le message M.

Lors d'une étape S370, le dispositif noeud 133 reçoit les messages d'acquittement ACK-B1 et ACK-B2. Il se peut également que lors de l'étape S370, le dispositif noeud 133 ne reçoive qu'un des deux messages d'acquittement, i.e. soit ACK-B1, soit ACK-B2. En effet, le mode HROBO étant utilisé préférentiellement dans les environnements perturbés, il est possible qu'un seul des deux messages parmi ACK-B 1 et ACK-B2 soit reçu par le dispositif noeud 133. Le dispositif noeud 133 devra alors considérer qu'il a reçu l'acquittement même s'il ne reçoit un message d'acquittement que sur une des bandes fréquentielles. Ainsi, même dans ce cas le dispositif noeud 133 considère que le message M a bien été reçu par le dispositif noeud 134.

La **Fig. 4** illustre schématiquement un procédé de transmission d'un message ou trame dans le mode HROBO selon un mode particulier de réalisation. Le message M est transmis par un dispositif noeud source (par exemple le dispositif noeud 134) à un dispositif noeud destinataire appartenant à son voisinage réseau (par exemple le dispositif noeud 133). Dans ce mode de réalisation, les deux dispositifs noeuds ont des capacités multi-bandes et l'un, e.g. le dispositif noeud 133, a décidé de communiquer en mode HROBO alors que l'autre, e.g. le dispositif noeud 134, a décidé de communiquer en mode multi-bandes par fragmentation en utilisant une modulation de type ROBO sur chaque bande.

Lors d'une étape S410, le dispositif noeud 134 transmet le message M au dispositif noeud 133 sur la première bande fréquentielle B1 en mode ROBO. Dans cet exemple particulier, le message M à envoyer est court. Il n'y aura dans ce cas pas de fragmentation, donc une seule bande est utilisée pour transmettre le message M. Dans le cas où le message M est long il est fragmenté et chaque fragment est alors transmis indépendamment des autres fragments sur des bandes fréquentielles qui peuvent être différentes.

Lors d'une étape S420, le dispositif noeud 133 reçoit le message M sur la bande B 1. Il transmet un message d'acquittement ACK-B 1 sur la bande B 1 au dispositif noeud 134. Lors d'une étape S430, le dispositif noeud 133 transmet également un message d'acquittement ACK-B2 au dispositif noeud 134 sur la seconde bande fréquentielle B2. En effet, le dispositif noeud 133 communique en mode HROBO donc les messages d'acquittement sont également dupliqués. Le fait d'envoyer deux messages d'acquittement sur des bandes différentes permet au dispositif noeud 133 d'informer le dispositif noeud 134 de son fonctionnement en mode HROBO. Cela permet également d'augmenter les chances de réception dudit message d'acquittement par le dispositif noeud 134 en environnement perturbé pour pallier des perturbations potentielles.

Lors d'une étape S440, le dispositif noeud 134 reçoit deux messages d'acquittement ACK-B1 et ACK-B2 sur deux bandes fréquentielles différentes et en déduit que le dispositif noeud 133 communique en mode HROBO.

Lors d'une étape S550, le dispositif noeud 134, ayant détecté que le dispositif noeud 133 communique en mode HROBO, change son mode de transmission multi-bandes par fragmentation en mode HROBO.

Il est à noter que le fait que le mode HROBO du dispositif noeud 133 ne soit pas détecté par le dispositif noeud 134, par exemple parce qu'un seul des deux messages d'acquittement est reçu, n'empêche pas la communication. Cela augmente juste le risque de perte de paquet (nécessitant donc des répétitions) dans la mesure où l'environnement est manifestement perturbé.

Les modes de réalisation sont décrits notamment en lien avec la norme G3-PLC et G3-PLC hybrid RF. Toutefois, ils ne se limitent pas à cette seule norme et pourraient être appliqués à d'autres normes, e.g. aux spécifications PRIME (pour « PoweRline Intelligent Metering Evolution » en anglais), c'est-à-dire notamment dans un réseau de communication par courants porteurs en ligne qui n'a pas de structure maillée mais qui a une structure en arbre.

Les modes de réalisation sont décrits notamment avec un mode de transmission multi-bandes par fragmentation utilisant une modulation ROBO dans chaque bande. Toutefois, dans les modes de réalisations décrits ci-dessus, ce mode de transmission peut être remplacé par un autre mode de transmission multi-bandes qui serait utilisé dans les environnements moins perturbés, i.e. avec des valeurs de LQI moyennes à élevées.

Les modes de réalisation ci-dessus sont décrits avec deux bandes fréquentielles B1 et B2. Ils peuvent être étendus au cas de plus de deux bandes fréquentielles. Ils s'appliquent de manière générale au cas de N bandes fréquentielles avec N un entier supérieur ou égal à 2.

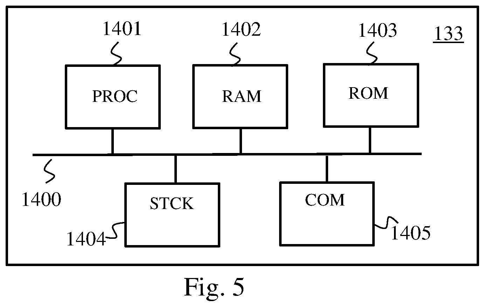

La **Fig. 5** illustre schématiquement un exemple d'architecture matérielle d'un dispositif noeud 133 (respectivement 134) du réseau de communication maillé 120 selon un mode de réalisation. Un tel dispositif noeud est qualifié de multi-bande car capable de transmettre un message sur plusieurs bandes fréquentielles. On note que la Fig. 5 pourrait aussi illustrer schématiquement un exemple d'architecture matérielle d'un module de traitement compris dans le dispositif noeud.

Selon l'exemple d'architecture matérielle représenté à la Fig. 5, le dispositif noeud 133 (respectivement 134) comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage telle qu'un disque dur (ou un lecteur de support de stockage, tel qu'un lecteur de cartes SD (« Secure Digital » en anglais) 1404 ; au moins une interface de communication 1405 permettant au dispositif noeud 133 (respectivement 134) de communiquer avec les dispositifs noeuds appartenant à son voisinage réseau, e.g. le dispositif noeud 134 (respectivement 133).

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le dispositif noeud est mis sous tension, le processeur 1401 est capable de lire de la RAM 1402 des instructions et de les exécuter. Ces instructions forment un programme d'ordinateur causant la mise en oeuvre, par le processeur 1401, de tout ou partie des procédés décrits en relation avec les Figs. 2, 3 et 4.

Les procédés décrits en relation avec les Figs. 2, 3 et 4 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Spécifie Integrated Circuit » en anglais). En général, le dispositif noeud 133 (respectivement 134) comprend de la circuiterie électronique configurée pour mettre en oeuvre les procédés décrits en relation avec les Figs. 2, 3 et 4.

## Revendications

1. Un procédé de transmission pour transmettre un message à partir d'un premier dispositif noeud vers un second dispositif noeud appartenant à un voisinage réseau dudit premier dispositif noeud, lesdits premier et second dispositifs noeuds appartenant à un réseau d'alimentation électrique utilisant des communications par courants porteurs en ligne et/ou par radio-fréquences, le procédé de transmission dit en mode hyper-robuste comprenant :
- transmettre (S210) par ledit premier dispositif, audit second dispositif noeud, ledit message sur une première bande fréquentielle d'un ensemble de bandes fréquentielles comprenant au moins deux bandes fréquentielles, ledit message étant modulé selon un mode robuste, une modulation selon ledit mode robuste comprenant successivement un codage Reed-Solomon, un codage convolutif, un codage par répétition de codes et une modulation BPSK; et
étant **caractérisé en ce qu'**il comprend en outre :
- transmettre (S220) par ledit premier dispositif, audit second dispositif noeud, ledit message sur au moins une seconde bande fréquentielle dudit ensemble de bandes fréquentielles, ledit message étant modulé selon ledit mode robuste et lesdites première et seconde bandes fréquentielles étant différentes ;
et comprenant en outre les étapes suivantes mises en oeuvre par ledit second dispositif noeud :
- recevoir ledit message sur ladite première bande fréquentielle et sur ladite seconde bande fréquentielle ;
- en déduire que le premier dispositif noeud est configuré selon le mode de transmission hyper-robuste ;
- changer son propre mode de transmission en mode hyper-robuste dans le cas où son propre mode de transmission est différent dudit mode hyper-robuste ;
- transmettre, audit premier dispositif noeud, un message d'acquittement sur ladite première bande fréquentielle et un message d'acquittement sur ladite seconde bande fréquentielle.

2. Le procédé de transmission selon la revendication 1, dans lequel en déduire que le premier dispositif noeud est configuré selon le mode de transmission hyper-robuste comprend en déduire que le premier dispositif noeud est configuré selon le mode de transmission hyper-robuste quand ledit second message est reçu avant la fin d'une fenêtre temporelle de longueur prédéfinie commençant à la réception dudit message sur ladite première bande temporelle.

3. Le procédé de transmission selon l'une des revendications 1 à 2, dans lequel ledit premier dispositif noeud, à réception d'un message en provenance dudit second dispositif noeud sur une desdites première et seconde bandes fréquentielles, renvoie un message d'acquittement sur ladite première bande fréquentielle et un message d'acquittement sur ladite seconde bande fréquentielle et ledit second dispositif noeud, recevant un message d'acquittement sur lesdites deux bandes fréquentielles, en déduit que le premier dispositif noeud est configuré selon le mode de transmission hyper-robuste et change son propre mode de transmission en mode hyper-robuste dans le cas où son propre mode de transmission est différent dudit mode hyper-robuste .

4. Le procédé de transmission selon l'une des revendications 1 à 3, dans lequel ledit premier dispositif noeud considère que ledit message a été correctement reçu par ledit second dispositif noeud dans le cas où au moins un message d'acquittement est reçu par ledit premier dispositif sur au moins une des première et seconde bandes fréquentielles.

5. Le procédé selon l'une quelconque des revendications 1 à 4, dans lequel ledit ensemble de bandes fréquentielles comprend :
la bande fréquentielle CENELEC A;
la bande fréquentielle CENELEC B;
la bande fréquentielle FCC ou la bande fréquentielle ARIB ; et
le canal RF de G3-PLC hybrid RF.

6. Un réseau d'alimentation électrique utilisant des communications par courants porteurs en ligne et/ou par radio-fréquences, ledit réseau comprenant au moins un premier dispositif noeud configuré pour transmettre un message selon un mode de transmission dit hyper-robuste vers un second dispositif noeud dudit réseau appartenant à son voisinage réseau, ledit premier dispositif noeud comprenant :
- des moyens pour transmettre, audit second dispositif noeud, ledit message sur une première bande fréquentielle d'un ensemble de bandes fréquentielles comprenant au moins deux bandes fréquentielles, ledit message étant modulé selon un mode robuste, une modulation selon ledit mode robuste comprenant successivement un codage Reed-Solomon, un codage convolutif, un codage par répétition de codes et une modulation BPSK; et
étant **caractérisé en ce qu'**il comprend en outre :
- des moyens pour transmettre, audit second dispositif noeud, ledit message sur au moins une seconde bande fréquentielle dudit ensemble de bandes fréquentielles, ledit message étant modulé selon ledit mode robuste et lesdites première et seconde bandes fréquentielles étant différentes ;
et ledit second dispositif noeud comprenant :
- des moyens pour recevoir ledit message sur ladite première bande fréquentielle et sur ladite seconde bande fréquentielle ;
- des moyens pour en déduire que le premier dispositif noeud est configuré selon le mode de transmission hyper-robuste ;
- des moyens pour changer son propre mode de transmission en mode de transmission hyper-robuste dans le cas où son propre mode de transmission est différent dudit mode de transmission hyper-robuste ;
- des moyens pour transmettre, audit premier dispositif noeud, un message d'acquittement sur ladite première bande fréquentielle et un message d'acquittement sur ladite seconde bande fréquentielle.

7. Un produit programme d'ordinateur **caractérisé en ce qu'**il comprend des instructions pour mettre en oeuvre, par un dispositif noeud, le procédé selon l'une quelconque des revendications 1 à 5, lorsque ledit programme est exécuté par un processeur du dispositif noeud.

8. Un support de stockage **caractérisé en ce qu'**il stocke un programme d'ordinateur comprenant des instructions pour mettre en oeuvre, par un dispositif noeud, le procédé selon l'une quelconque des revendications 1 à 5, lorsque ledit programme est exécuté par un processeur du dispositif noeud.

## Patentansprüche

1. Übertragungsverfahren zur Übertragung einer Nachricht von einer ersten Knotenvorrichtung zu einer zweiten Knotenvorrichtung, die zu einer Netzwerkumgebung der ersten Knotenvorrichtung gehört, wobei die erste und zweite Knotenvorrichtung zu einem Stromversorgungsnetzwerk gehören, das Kommunikationen über Powerline und/oder über Radiofrequenzen nutzt, wobei das Verfahren zur Übertragung im sogenannten hyper-robusten Modus Folgendes umfasst:
- Übertragen (S210) der Nachricht durch die erste Vorrichtung an die zweite Knotenvorrichtung auf einem ersten Frequenzband einer Menge von Frequenzbändern, die wenigstens zwei Frequenzbänder umfasst, wobei die Nachricht gemäß einem robusten Modus moduliert wird, wobei ein Modulieren gemäß dem robusten Modus aufeinanderfolgend eine Reed-Solomon-Codierung, eine Faltungscodierung, eine Codierung durch Wiederholung von Codes und eine BPSK-Modulation umfasst; und **dadurch gekennzeichnet, dass** sie ferner Folgendes umfasst:
- Übertragen (S220) der Nachricht durch die erste Vorrichtung an die zweite Knotenvorrichtung auf wenigstens einem zweiten Frequenzband der Menge von Frequenzbändern, wobei die Nachricht gemäß dem robusten Modus moduliert wird und das erste und zweite Frequenzband verschieden sind;
und ferner umfassend die folgenden Schritte, die von der zweiten Knotenvorrichtung durchgeführt werden:
- Empfangen der Nachricht auf dem ersten Frequenzband und auf dem zweiten Frequenzband;
- daraus ableiten, dass die erste Knotenvorrichtung gemäß dem hyper-robusten Übertragungsmodus konfiguriert ist;
- Ändern ihres eigenen Übertragungsmodus zum hyper-robusten Modus, falls ihr eigener Übertragungsmodus vom hyper-robusten Modus verschieden ist;
- Übertragen, an die erste Knotenvorrichtung, einer Bestätigungsnachricht auf dem ersten Frequenzband und einer Bestätigungsnachricht auf dem zweiten Frequenzband.

2. Übertragungsverfahren nach Anspruch 1, wobei daraus ableiten, dass die erste Knotenvorrichtung gemäß dem hyper-robusten Übertragungsmodus konfiguriert ist, daraus ableiten, dass die erste Knotenvorrichtung gemäß dem hyper-robusten Übertragungsmodus konfiguriert ist, wenn die zweite Nachricht vor dem Ende eines Zeitfensters vorgegebener Länge, das beim Empfang der Nachricht auf dem ersten Zeitband beginnt, umfasst.

3. Übertragungsverfahren nach einem der Ansprüche 1 bis 2, wobei die erste Knotenvorrichtung bei Empfang einer Nachricht von der zweiten Knotenvorrichtung auf einem vom ersten und zweiten Frequenzband eine Bestätigungsnachricht auf dem ersten Frequenzband und eine Bestätigungsnachricht auf dem zweiten Frequenzband zurücksendet und die zweite Knotenvorrichtung, die eine Bestätigungsnachricht auf den zwei Frequenzbändern empfängt, daraus ableitet, dass die erste Knotenvorrichtung gemäß dem hyper-robusten Modus konfiguriert ist, und ihren eigenen Übertragungsmodus zum hyper-robusten Modus ändert, falls ihr eigener Übertragungsmodus vom hyper-robusten Modus verschieden ist.

4. Übertragungsverfahren nach einem der Ansprüche 1 bis 3, wobei die erste Knotenvorrichtung davon ausgeht, dass die Nachricht korrekt von der zweiten Knotenvorrichtung empfangen wurde, falls wenigstens eine Bestätigungsnachricht von der ersten Vorrichtung auf wenigstens einem vom ersten und zweiten Frequenzband empfangen wird.

5. Verfahren nach einem der Ansprüche 1 bis 4, wobei die Menge von Frequenzbändern folgende umfasst:
das Frequenzband CENELEC A; das Frequenzband CENELEC B;
das Frequenzband FCC oder das Frequenzband ARIB; und
den RF-Kanal von G3-PLC Hybrid RF.

6. Stromversorgungsnetzwerk, das Kommunikationen über Powerline und/oder über Radiofrequenzen nutzt, wobei das Netzwerk wenigstens eine erste Knotenvorrichtung umfasst, die dazu ausgebildet ist, eine Nachricht gemäß einem hyper-robusten Übertragungsmodus zu einer zweiten Knotenvorrichtung des Netzwerks, die zu deren Netzwerkumgebung gehört, zu übertragen, wobei die erste Knotenvorrichtung Folgendes umfasst:
- Mittel zum Übertragen der Nachricht an die zweite Knotenvorrichtung auf einem ersten Frequenzband einer Menge von Frequenzbändern, die wenigstens zwei Frequenzbänder umfasst, wobei die Nachricht gemäß einem robusten Modus moduliert wird, wobei ein Modulieren gemäß dem robusten Modus aufeinanderfolgend eine Reed-Solomon-Codierung, eine Faltungscodierung, eine Codierung durch Wiederholung von Codes und eine BPSK-Modulation umfasst; und **dadurch gekennzeichnet, dass** sie ferner Folgendes umfasst:
- Mittel zum Übertragen der Nachricht an die zweite Knotenvorrichtung auf wenigstens einem zweiten Frequenzband der Menge von Frequenzbändern, wobei die Nachricht gemäß dem robusten Modus moduliert wird und das erste und zweite Frequenzband verschieden sind;
und die zweite Knotenvorrichtung Folgendes umfasst:
- Mittel zum Empfangen der Nachricht auf dem ersten Frequenzband und auf dem zweiten Frequenzband;
- Mittel um daraus abzuleiten, dass die erste Knotenvorrichtung gemäß dem hyper-robusten Übertragungsmodus konfiguriert ist;
- Mittel zum Ändern ihres eigenen Übertragungsmodus zum hyper-robusten Übertragungsmodus, falls ihr eigener Übertragungsmodus vom hyper-robusten Übertragungsmodus verschieden ist;
- Mittel zum Übertragen, an die erste Knotenvorrichtung, einer Bestätigungsnachricht auf dem ersten Frequenzband und einer Bestätigungsnachricht auf dem zweiten Frequenzband.

7. Computerprogrammprodukt, **dadurch gekennzeichnet, dass** es Anweisungen umfasst, um durch eine Knotenvorrichtung das Verfahren nach einem der Ansprüche 1 bis 5 durchzuführen, wenn das Programm von einem Prozessor der Knotenvorrichtung ausgeführt wird.

8. Speichermedium, **dadurch gekennzeichnet, dass** ein Computerprogramm darauf gespeichert ist, das Anweisungen umfasst, um durch eine Knotenvorrichtung das Verfahren nach einem der Ansprüche 1 bis 5 durchzuführen, wenn das Programm von einem Prozessor der Knotenvorrichtung ausgeführt wird.

## Claims

1. A transmission method for transmitting a message from a first node device to a second node device belonging to a network neighbourhood of said first node device, said first and second node devices belonging to an electrical supply network using powerline and/or radio-frequency communications, the transmission method in so-called hyper-robust mode comprising:
- transmitting (S210) said message, by said first device, to said second node device, on a first frequency band of a set of frequency bands comprising at least two frequency bands, said message being modulated according to a robust mode, a modulation according to said robust mode comprising successively a Reed-Solomon coding, a convolutional coding, a coding by code repetition and a BPSK modulation; and
being **characterised in that** it further comprises:
- transmitting (S220) said message, by said first device, to said second node device, on at least one second frequency band of said set of frequency bands, said message being modulated according to said robust mode and said first and second frequency bands being different;
and further comprising the following steps performed by said second node device:
- receiving said message on said first frequency band and on said second frequency band;
- deducing therefrom that the first node device is configured according to the hyper-robust transmission mode;
- changing its own transmission mode into hyper-robust mode in the case where its own transmission mode is different from said hyper-robust mode;
- transmitting, to said first node device, an acknowledgement message on said first frequency band and an acknowledgement message on said second frequency band.

2. The transmission method according to claim 1, wherein deducing therefrom that the first node device is configured according to the hyper-robust transmission mode comprises deducing therefrom that the first node device is configured according to the hyper-robust transmission mode when said second message is received before the end of a time window of predefined length commencing with the reception of said message on said first time band.

3. The transmission method according to one of claims 1 to 2, wherein said first node device, on receiving a message coming from said second node device on one of said first and second frequency bands, returns an acknowledgement message on said first frequency band and an acknowledgement message on said second frequency band, and said second node device, receiving an acknowledgement message on said two frequency bands, deduces therefrom that the first node device is configured according to the hyper-robust transmission mode and changes its own transmission mode into hyper-robust mode in the case where its own transmission mode is different from said hyper-robust mode.

4. The transmission method according to one of claims 1 to 3, wherein said first node device considers that said message has been correctly received by said second node device in the case where at least one acknowledgement message is received by said first device on at least one of the first and second frequency bands.

5. The method according to any one of claims 1 to 4, wherein said set of frequency bands comprises:
the CENELEC A frequency band;
the CENELEC B frequency band;
the FCC frequency band or the ARIB frequency band; and
the RF channel of G3-PLC hybrid RF.

6. An electrical supply network using powerline and/or radio-frequency communications, said network comprising at least one first node device configured for transmitting a message according to a so-called hyper-robust transmission mode to a second node device of said network belonging to its network neighbourhood, said first node device comprising:
- means for transmitting said message to said second node device on a first frequency band of a set of frequency bands comprising at least two frequency bands, said message being modulated according a robust mode, a modulation according to said robust mode comprising successively a Reed-Solomon coding, a convolutional coding, a coding by code repetition and a BPSK modulation; and
being **characterised in that** it further comprises
- means for transmitting said message, to said second node device, on at least one second frequency band of said set of frequency bands, said message being modulated according to said robust mode and said first and second frequency bands being different;
and said second node device comprising:
- means for receiving said message on said first frequency band and on said second frequency band;
- means for deducing therefrom that the node device is configured according to the hyper-robust transmission mode;
- means for changing its own transmission mode into hyper-robust transmission mode in the case where its own transmission mode is different from said hyper-robust transmission mode;
- means for transmitting, to said first node device, an acknowledgement message on said first frequency band and an acknowledgement message on said second frequency band.

7. A computer program product, **characterised in that** it comprises instructions for implementing, by a node device, the method according to any one of the claims 1 to 5, when said program is executed by a processor of the node device.

8. A storage medium, **characterised in that** it stores a computer program comprising instructions for implementing, by a node device, the method according to any one of claims 1 to 5, when said program is executed by a processor of the node device.
